(19) Europäisches Patentamt
European Patent Office
Office européen des brevets

(11) **EP 1 004 616 B1**

(12) **EUROPÄISCHE PATENTSCHRIFT**

(45) Veröffentlichungstag und Bekanntmachung des Hinweises auf die Patenterteilung:
**04.02.2004   Patentblatt 2004/06**

(51) Int Cl.7: **C08J 3/12**, C08J 3/22, C08J 3/20
// C08L23:02

(21) Anmeldenummer: **99122626.7**

(22) Anmeldetag: **13.11.1999**

(54) **Mikronisierte Polyolefine zur Herstellung von Pigmentkonzentraten**

Micronized polyolefins for preparing pigment concentrates

Polyoléfines micronizées pour la préparation de concentrés de pigments

(84) Benannte Vertragsstaaten:
**AT BE CH CY DE DK ES FI FR GB GR IE IT LI LU MC NL PT SE**

(30) Priorität: **28.11.1998  DE 19855058**

(43) Veröffentlichungstag der Anmeldung:
**31.05.2000   Patentblatt 2000/22**

(73) Patentinhaber: **Goldschmidt AG**
**45127 Essen (DE)**

(72) Erfinder:
• **Knebelkamp, Arno, Dr.**
  **45133 Essen (DE)**
• **Schäfer, Werner**
  **45219 Essen (DE)**
• **Scheiba, Manfred**
  **45139 Essen (DE)**

(56) Entgegenhaltungen:
**EP-A- 0 222 061**          **EP-A- 0 423 590**
**GB-A- 906 973**            **GB-A- 1 108 298**
**US-A- 3 975 481**          **US-A- 4 446 311**

**Beschreibung**

Gegenstand der Erfindung ist die Verwendung mikronisierter Polyolefin-Pulver zur Herstellung von Pigmentkonzentraten für die Einfärbung von Polyolefinen.

Polyolefine werden üblicherweise unter Verwendung von Pigmentkonzentraten (Pigment-Masterbatche) eingefärbt. Diese Pigmentkonzentrate, hergestellt über Extrusionsprozesse, enthalten das entsprechende Pigment in Konzentrationen von etwa 20-70%, einen polymeren Träger sowie verschiedenartige Substanzen (Wachse/Dispergiermittel), die den Dispergierprozeß unterstützen und für eine möglichst gleichmäßige Verteilung (Dispergierung) der Pigmente sorgen.

Je nach Einsatzzweck werden an die Qualität dieser Pigmentkonzentrate besondere Anforderungen gestellt: Für das Einfärben dickwandiger Spritzgußteile ist eine optimale Dispergierung der Pigmente nicht unbedingt erforderlich, da Pigmentagglomerate oder eine Stippenbildung als Folge einer ungenügenden Dispergierung der Pigmente im Endprodukt nicht stören würden. Bei der Einfärbung von Polyolefinfolien oder Polyolefinfasern jedoch führt eine ungenügende Dispergierung zu großen Problemen: Im Folienbereich stört Stippenbildung den optischen Eindruck und führt zur Rißbildung sowie zu unerwünschten Licht-Streueffekten. Bei der Herstellung von Polyolefinfasern führen Pigmentagglomerate zur Verstopfung der Schmelzsiebe des Extruders und zum Faserbruch, der in der Regel mit längeren Stillstandszeiten und erhöhtem Reinigungsbedarf der Anlagen begleitet ist.

Pigmentkonzentrate und Verfahren zu deren Herstellung für die genannten Anwendungen sind dem Stand der Technik zu entnehmen.

So beschreibt die DE-AS 12 39 093 Trägermaterialien auf Basis einer Mischung aus einem amorphen Ethylen-Propylen-Block-Mischpolymerisat und einem kristallinen Polypropylen für die Herstellung von Pigmentkonzentraten. DE-OS 26 52 628 bezieht sich auf die Verwendung von Polypropylenwachsen mit einer Viskosität von 500 bis 5000 mPas (170°C) und einem isotaktischen Anteil von 40 bis 90%.

In der DE 195 16 387 A1 wird eine hocheffektive Dispergierung durch ein Dispergiermittel erreicht, welches eine Mischung verschiedener Polyolefinkomponenten und spezieller Polyacrylsäureester darstellt.

EP 0 423 590 A2 offenbart die Verwendung von zerkleinerten Polyolefinen, mit einer Partikelgröße von 1-10.000 µm und Pigmenten zur Herstellung eines Einfärbungsmaterials.

Die Herstellung der Pigmentpräparationen kann im festen Zustand durch Mischen als Dry-Blend und/oder durch Schmelzemischen in geeigneten Extrudern oder Knetern erfolgen.

Üblicherweise werden die pulverförmigen organischen oder anorganischen Pigmente mit granulat- oder pulverförmigen Polyolefinen und entsprechenden Polyolefin-Wachsen miteinander vermischt. Auch die Polyolefin-Wachse werden pulverförmig eingesetzt. Sie werden entweder durch Sprühtechniken oder Vermahlungsprozesse erhalten. Die Korngrößen dieser Wachse liegen in der Regel bei < 1000 µm. Je nach verwendetem Verfahren variieren die Korngrößen-Verteilungen natürlich.

Für eine optimale Dispergierung werden, je nach Pigmenttyp, bis zu 40 Gew.-% Wachs benötigt. Da zu hohe Wachsmengen immer wieder zu Migrationen und zu Ablagerungen an den Düsen führen, ist es von besonderem Interesse, Pigmentkonzentrate mit gut dispergierten Pigmenten bei möglichst geringen Anteilen an Polyolefin-Wachsen herzustellen.

Die erfindungsgemäße Aufgabe besteht daher darin, Pigmentkonzentrate mit einem möglichst geringen Anteil an Polyolefin-Wachsen und gleichzeitig hoher Dispergierqualitat herzustellen. Dabei muß gewährleistet sein, daß sich diese Pigmentkonzentrate ohne Einschränkung in den bekannten Anwendungen einsetzen lassen; d.h. in ihrem Eigenschaftsprofil auch für die Einfärbung textiler Fasern uneingeschränkt einzusetzen sind.

Die erfindungsgemäße Aufgabe wird dadurch gelöst, daß für die Herstellung von Pigmentkonzentraten mikronisierte Pulver auf Basis von Polyolefinen und/oder Polyolefinwachsen mit großer spezifischer Oberfläche verwendet werden, wie sie beispielsweise durch kryogenes Vermahlen mit der Luftstrahlmühle erhalten werden.

Gegenstand der vorliegenden Erfindung ist daher in einer ersten Ausführungsform die Verwendung mikronisierter Polyolefine und/oder Polyolefinwachse, hergestellt durch Vermahlung von Polyolefinen und/oder Polyolefinwachsen, zur Herstellung von Pigmentkonzentraten, dadurch gekennzeichnete, daß der Gewichtsanteil der Korngrößenfraktion kleiner 10 µm wenigstens 1 Gew.-%, der Gewichtsanteil der Korngrößenfraktion kleiner 100 µm wenigstens 10 Gew.-% und der Gewichtsanteil der Korngrößenfraktion kleiner 500 µm wenigstens 90 Gew.-% beträgt.

Die Korngrößenverteilungen dieser Pulver sollten bevorzugt zwischen 10 und 100 µm liegen, um eine gute Dispergierwirkung zu erzielen.

Der erfindungsgemäße Einsatz dieser mikronisierten Polyolefine und/oder Polyolefinwachse erlaubt die Darstellung hochkonzentrierter Pigmentkonzentrate mit einem deutlich verringerten Wachsanteil oder gänzlich ohne Wachskomponenten.

Zur Herstellung der mikronisierten Polyolefine (PO) bzw. Polyolefinwachse (POW) können prinzipiell alle etablierten Mahlverfahren herangezogen werden. In Abhängigkeit von den gewählten Mahlbedingungen läßt sich die Feinteiligkeit der erhaltenen Produkte über einen weiten Bereich gezielt variieren. Als besonders geeignet zur Herstellung mikronisierter Produkte hat sich eine modulare Prallmühle erwiesen (Fa. Hosokawa Mikropul).

Als wichtige Unterscheidungskriterien der eingesetzten Polyolefine und/oder Polyolefinwachse gegenüber dem Stand der Technik dienen die Korngrößenverteilungen und Siebobergrenzen der Produkte.

Ausführungsbeispiele:

1) Herstellung der mikronisierten Polyolefine bzw. Polyolefinwachse:

In Tab. 1 sind für die verwendeten Produkte die entsprechenden Mahlbedingungen und zur Charakterisierung die resultierenden Korngrößenverteilungen mit den entsprechenden Siebobergrenzen aufgeführt. Mit dem Buchstaben A bezeichnete Beispiele verweisen auf nicht mikronisierte Produkte, welche für die Herstellung von Pigmentkonzentraten den Stand der Technik darstellen und somit nicht erfindungsgemäß sind. Mit den Buchstaben B, C und D, nachfolgend zur Beispielnummer, wird der erfindungsgemäße Einsatz der mikronisierten Produkte beschrieben.

Tabelle 1:

Korngrößenverteilungen und Siebobergrenzen der verwendeten Polyolefine und/oder Polyolefinwachse

| BEISPIEL | POLYOLEFIN (PO) ODER POLYOLEFINWACHS (POW) | VERMAHLUNGSBEDINGNGEN MÜHLE/TEMPERATUR | KORNGRÖßEN-VERTEILUNG | SIEBOBERGRENZEN |
|---|---|---|---|---|
| 1A | Polypropylenwachs[1] (POW) | Scheibenmühle/ Raumtemperatur | 0% < 10 µm<br>0.1 % < 100 µm<br>33% < 500 µm | 2000 µm |
| 1B | Polypropylenwachs[1] (POW) | Scheibenmühle/-30°C | 1.1 % < 10 µm<br>35 % < 100 µm<br>98 % < 500 µm | 500 µm |
| 2A | Tego® wax P121[2] (POW) | Scheibenmühle/Raumtemperatur | 0.1 % < 10 µm<br>3.0 % < 100 µm<br>45 % < 500 µm | 1400 µm |
| 2B | Tego® wax P121[2] (POW) | Scheibenmühle/-30°C | 1.3 % < 10 µm<br>42 % < 100 µm<br>99 % < 500 µm | 500 µm |
| 2C | Tego® wax P121[2] (POW) | Prallmühle/-50°C | 13 % < 10 µm<br>88 % < 100 µm<br>99 % < 500 µm | 500 µm |

EP 1 004 616 B1

Fortsetzung Tabelle 1:

| BEISPIEL | POLYOLEFIN (PO) ODER POLYOLEFINWACHS (POW) | VERMAHLUNGSBEDINGNGEN MÜHLE/TEMPERATUR | KORNGRÖßEN-VERTEILUNG | SIEBOBERGRENZEN |
|---|---|---|---|---|
| 3A | Polypropylen[3] (PO) | Scheibenmühle/-10°C | 0%    < 10 µm<br>1.2 % < 100 µm<br>68 %  < 500 µm | 1000 µm |
| 3B | Polypropylen[3] (PO) | Prallmühle/-100°C | 4.9 % < 10 µm<br>47 % < 100 µm<br>97 %  < 500 µm | 500 µm |
| 4A | Polyethylenwachs[4] (POW) | versprüht | 0 %   < 10 µm<br>0 %   < 100 µm<br>7 %   < 500 µm | 2000 µm |
| 4B | Polyethylenwachs[4] (POW) | Prallmühle/-100°C | 11 %  < 10 µm<br>96 % < 100 µm<br>99 %  < 500 µm | 500 µm |
| 5A | Polyethylen[5] (PO) | Scheibenmühle/ Raumtemperatur | 0 %   < 10 µm<br>2.6 % < 100 µm<br>99 %  < 500 µm | 1000 µm |
| 5B | Polyethylen[5] (PO) | Prallmühle/-100°C | 2.2 % < 10 µm<br>98.6 %< 100 µm<br>99 %  < 500 µm | 1000 µm |

EP 1 004 616 B1

1 Es wurde ein Polypropylenwachs mit einem Erweichungspunkt von 160°C und einer Dichte von 0.88g/cm$^3$ verwendet

2 Dispergierwachscompound der Firma Th. Goldschmidt AG; Tropfpunkt etwa 115°C, Dichte: 0.93 g/cm$^3$

3 Es wurde ein Polypropylen mit einem MFI von 45 (230°C/2.16 kg) und einer Dichte von 0.91g/cm$^3$ verwendet.

4 Verwendung fand ein Polyethylenwachs mit einem Tropfpunkt von 110 bis 115°C und einer Dichte von 0.91g/cm$^3$

5 Es wurde ein Polyethylen mit einem MFI von 200 (190°C/2.16 kg) und einer Dichte von 0.92g/cm$^3$ eingesetzt

Tab. 1 zeigt den deutlichen Einfluß der Vermahlungsbedingungen auf die Korngrößenverteilungen. Mikronisierte Produkte zeichnen sich in der Verteilung durch einen hohen Anteil an Korngrößenfraktionen aus, die kleiner als 100 µm (1 µm = 10$^{-6}$ m) sind.

Die Herstellung der Pigmentpräparationen erfolgte durch Vormischen der entsprechenden Einzelkomponenten (Pigment/Wachs/polymerer Träger) in den jeweils angegebenen Mengenverhältnissen (Tab. 2) und anschließender Schmelzemischung in einem Doppelschneckenextruder der Fa. Leistritz (Modell: Micro 27 GL 40D). Als Pigmentkomponente wurde entweder ein Rotpigment (Pigment Red 57:1/Irgalith® Rubin 4 BP, Ciba) oder ein Phthalocyaninblau (Pigment Blue 15:3/Heliogenblau K 7090, BASF) eingesetzt. Als polymerer Träger wurde entweder ein Polypropylen (MFI =45; 230°C/2.16 kg) oder ein Polyethylen (LDPE, MFI = 20; 190°C/2.16 kg) eingesetzt.

In Klammern angegeben finden sich in Tab. 2 die entsprechenden Gewichtsverhältnisse.

Tabelle 2:

Herstellung der Pigmentpräparationen

| Beispiel | Polyolefin bzw. Polyolefinwachs aus Beispiel Nr. (Anteile) | Pigment-Typ (30 Teile) | Polymerträger (Anteile) |
|---|---|---|---|
| 6A | 1A (30) | Red 57:1<br>Blue 15:3 | Polypropylen (40) |
| 6B | 1B (30) | Red 57:1 | Polypropylen (40) |
| 7A | 2A (20) | Red 57:1 | Polypropylen (50) |
| 7B | 2B (20) | Red 57:1 | Polypropylen (50) |
| 7C | 2C (20) | Red 57:1 | Polypropylen (50) |
| 7D | 2C (20) | Blue 15:3 | Polypropylen (50) |
| 8A | 3A (70) | Red 57:1 | -- |
| 8B | 3B (70) | Red 57:1 | -- |
| 8C | 3B (70) | Blue 15:3 | -- |
| 9A | 4A (20) | Red 57:1 | Polyethylen (50) |
| 9B | 4B (20) | Red 57:1 | Polyethylen (50) |
| 10A | 5A (70) | Red 57:1 | -- |
| 10B | 5B (70) | Red 57:1 | -- |

Zur Beurteilung der Dispergierqualität von Pigmenten in Farbmasterbatches bedient man sich häufig des Druckfiltertestes. Bei diesem Test wird eine Mischung aus Masterbatch und polymerem Träger, die einen Pigmentgehalt von 10 Gew.-% aufweist, in einem Extruder aufgeschmolzen und über ein definiertes Filterpaket extrudiert. Über einen definierten Zeitraum (1h) wird der Druckanstieg verfolgt. Als Maß für die Güte des Masterbatches wird der Druckfilterwert (DF) bestimmt, der sich nach folgender Formel ergibt:

$$DF = (P_{max}-P_o) \times F \times 100/t \times K \times G \ (bar \times cm^2/g)$$

mit

$P_{max}$ = Endruck (bar)
$P_o$ = Druck bei Betrieb ohne Masterbatch
F = Filterfläche ($cm^2$)
t = Meßdauer (min)
K = Konzentration (%)
G = Extruderdurchsatz (g/min)

Der Druckfilterwert gibt an, in welchem Maß ein Filterpaket durch Agglomerate zugesetzt wird. Ein sehr niedriger Druckfilterwert weist auf eine sehr gute Dispergierung der Pigmente hin.

Einen weiteren Test zur Bestimmung der Dispergiergüte stellt die Bestimmung der Farbstärke eines Masterbatches dar. Hierbei wird das Masterbatch mit dem polymeren Träger auf einen Pigmentanteil von 0,2 Gew.-% verdünnt und mit Titandioxid aufgehellt (10 Gew.-Teile Titandioxid bezogen auf 1 Gew.-Teil Farbpigment). Dieses Material wird zu Platten verspritzt, an denen man die coloristischen Bestimmungen durchführt. Für diese Messungen hat sich das CIE-$L_{ab}$-Farbsystem bewährt.

Je höher die Farbstärke im Vergleich zu einer Referenzprobe ist, desto besser ist die Verteilung des Pigmentes, bzw. desto geringer ist der Agglomeratanteil in dem zugrundeliegenden Farbmasterbatch.

Zum Vergleich wird die Farbstärke der Referenzproben per Definition mit 100% festgelegt.

In Tab. 3 angegeben finden sich die entsprechenden Resultate für Pigmentkonzentrate, wie sie als Stand der Technik oder erfindungsgemäß, d.h. auf Basis der vermahlenen Produkte, erhalten wurden.

Tabelle 3:

| Druckfilterwerte und Ergebnisse der Farbstärkemessungen | | | | |
|---|---|---|---|---|
| **Beispiel-Nr.** | **Druckfilterwert (bar x $cm^2$/g)** | | **Farbstarke (%)** | |
| | **Red 57:1** | *Blue 15:3* | **Red 57:1** | *Blue 15:3* |
| 6A | 18.5 | *6.5* | 100 | *100* |
| 6B | 9.5 | | 112 | |
| 7A | 6.6 | | 120 | |
| 7B | 2.5 | | 124 | |
| 7C | 0.5 | | 130 | |
| 7D | 1.8 | | -- | *130* |
| 8A | 28.0 | | 92 | |
| 8B | 1.2 | | 125 | |
| 8C | 2.5 | | | 124 |
| 9A | 8.5 | | 100 | |
| 9B | 1.6 | | 126 | |
| 10A | 10.5 | | 77 | |
| 10B | 4.5 | | 118 | |

Zu erkennen sind die erheblich verbesserten Resultate bezüglich des Druckfilterwertes und der Farbstärke bei Einsatz der mikronisierten Produkte. Darüber hinaus gestattet die Vermahlung von hochmolekularen Polyolefinen die Reduktion bzw. den vollständigen Verzicht auf Polyolefinwachse. Damit können Pigmentkonzentrate auch wachsfrei formuliert werden.

Die erhaltenen Resultate stellen nur eine Auswahl der vorhandenen Möglichkeiten dar und sind nicht als Beschränkung anzusehen.

**Patentansprüche**

**1.** Pigmentkonzentrate enthaltend als Komponenten

10 bis 60 Gew.-% Pigment und,
40 bis 90 Gew.-% eines mikronisierten Polyolefins und/oder Polyolefinwachses mit einem Gewichtsanteil der Korngrößenfraktion kleiner 10 μm von wenigstens 1 Gew.-%, einem Gewichtsanteil der Korngrößenfraktion kleiner 100 μm von wenigstens 10 Gew.-% und einem Gewichtsanteil der Korngrößenfraktion kleiner 500 μm von wenigstens 90 %.

**2.** Pigmentkonzentrate nach Anspruch 1 enthaltend

10 bis 60 Gew.-% Pigment,
10 bis 50 Gew.-% eines mikronisierten Polyolefins oder Polyolefinwachses und
10 bis 80 Gew.-% eines weiteren Polyolefins, mit der Maßgabe, dass das mikronisierte Polyolefin oder Polyolefinwachs und das weitere Polyolefinwachs zusammen einen Gewichtsanteil von 40 bis 90 Gew.-% ausmachen.

**3.** Verwendung der Pigmentkonzentrate nach Anspruch 1 oder 2 zur Einfärbung von Polyolefinfertigprodukten.

**Claims**

**1.** Pigment concentrates comprising as components:

from 10 to 60% by weight of pigment, and
from 40 to 90% by weight of micronized polyolefin and/or polyolefin wax having a proportion of the particle size fraction smaller than 10 μm of at least 1% by weight, the proportion of the particle size fraction smaller than 100 μm is at least 10% by weight,
and the proportion of the particle size fraction smaller than 500 μm is at least 90% by weight.

**2.** Pigment concentrates according to Claim 1, comprising

from 10 to 60% by weight of pigment,
from 10 to 50% by weight of micronized polyolefin or polyolefin wax, and
from 10 to 80% by weight of a further polyolefin, with the proviso that the micronized polyolefin or polyolefin wax and the further polyolefin wax together make up a proportion of from 40 to 90% by weight.

**3.** Use of the pigment concentrates according to Claim 1 or 2 for colouring a finished polyolefin product.

**Revendications**

**1.** Concentrés de pigment, contenant comme composants

10 à 60% en poids de pigment et
40 à 90% en poids d'une polyoléfine micronisée et/ou d'une cire de polyoléfine micronisée présentant une proportion pondérale de la fraction de tailles de particules inférieures à 10 μm d'au moins 1% en poids, une proportion pondérale de la fraction de tailles de particules inférieures à 100 μm d'au moins 10% en poids et une proportion pondérale de la fraction de tailles de particules inférieures à 500 μm d'au moins 90%.

**2.** Concentrés de pigment, contenant

10 à 60% en poids de pigment,

10 à 50% en poids d'une polyoléfine micronisée ou d'une cire de polyoléfine micronisée et

10 à 80% en poids d'une autre polyoléfine, à condition que la polyoléfine micronisée ou la cire de polyoléfine micronisée et l'autre cire de polyoléfine représentent ensemble une proportion pondérale de 40 à 90% en poids.

3. Utilisation des concentrés de pigment selon la revendication 1 ou 2 pour la teinture de produits finis en polyoléfine.